# EUROPÄISCHE PATENTANMELDUNG

(11) **EP 3 685 902 A1**
(43) Veröffentlichungstag der Anmeldung: **29.07.2020**
(21) Anmeldenummer: 19153259.7
(22) Anmeldetag: 23.01.2019
(51) Int. Cl.: B01D 46/00, B01D 46/24, B01D 46/42, B01D 46/52, B05B 14/435

(54) **FILTERANLAGE**

(71) Anmelder: Rolf Schlicht GmbH, 23858 Reinfeld (DE)
(72) Erfinder: Die Erfindernennung liegt noch nicht vor
(74) Vertreter: Patentanwälte Vollmann Hemmer Lindfeld Partnerschaft mbB

(57) **Zusammenfassung**

Die Filteranlage einer Bepuderungsmaschine weist drei parallel geschaltete Filter auf, deren jeweils eine Seite mit einem Rohgas führenden Raum (4) verbunden ist und deren jeweils andere Seite mit einem Reingas führenden Raum verbindbar ist. Als Filter sind Filterpatronen (7) vorgesehen, die ein zur Reingasseite offenes Ende aufweisen und mit ihren offenen Enden jeweils mit einem Hohlzylinder (11) verbunden sind, über den sie in der Maschine befestigt sind. In jedem Hohlzylinder (11) ist ein Kolben angeordnet, derart, dass in einer ersten Stellung des Kolbens das offene Filterende mit dem Reingas führenden Raum verbunden ist, dass in einer zweiten und einer dritten Stellung die Verbindung zum Reingasraum getrennt ist, wobei beim Verfahren des Kolbens von der zweiten zur dritten Stellung ein Gegenstrom zur Abreinigung des Filters erzeugt wird. (Fig. 4)

## Beschreibung

Die Erfindung betrifft eine Filteranlage für eine Vorrichtung zum Bepudern, Pulverbeschichten oder dergleichen mit den im Oberbegriff des Anspruchs 1 angegebenen Merkmalen.

Bepuderungsmaschinen zählen zum Stand der Technik, es wird in diesem Zusammenhang beispielhaft auf eine unter "RS-POWDERTECH" vertriebene Maschine der Rolf Schlicht GmbH in Reinfeld verwiesen, die zum elektrostatischen Bepudern von Kabeln, Schläuchen und dergleichen vorgesehen ist. Komponenten einer solchen Maschine sind beispielsweise eine Puderpistole, eine Puderkammer, eine Puderfeindosierung, ein Bedientableau, eine Pulverstromüberwachung, eine Puderbefüllung, ein Drucklufttrockner und ein Pudernachfüllwagen. Vergleichbare Komponenten finden sich in Maschinen zur Pulverbeschichtung. Neben den vorgenannten Komponenten weisen derartige Maschinen auch regelmäßig eine Filteranlage auf, um das mit Pulver oder Puder angereicherte Gas, typischerweise Luft, zu reinigen, d. h. diese mitgeführten Partikel zurückzuhalten. Hierzu zählt es zum Stand der Technik, großflächige Filter vorzusehen, durch welche das zu reinigende Rohgas geführt wird, wobei die abzuscheidenden Partikel in der Filteroberfläche verbleiben und das dann gebildete Reingas auf der anderen Seite des Filters abgeführt wird.

Bei der eingangs beschriebenen Bepuderungsmaschine sind hierzu mehrere Filterpatronen vorgesehen, welche in einem Rohgasraum angeordnet sind, die also mit einer Seite mit dem Rohgas in Verbindung stehen und deren andere Seite mit einem Reingas führenden Kanal oder Raum verbindbar ist. Eine solche Anordnung ist aus DE 10 2004 013 089 B4 bekannt.

Diese Filter werden dabei stets im Wechsel betrieben, um eine kontinuierliche Durchströmbarkeit der Filteranlage zu gewährleisten. Je länger die Filter im Betrieb sind, desto mehr setzen sie sich zu, d. h., sie benötigen eine wachsende Druckdifferenz, um durchströmt zu werden. Um sicherzustellen, dass der Durchströmungswiderstand eines Filters ein gewisses Maß nicht übersteigt, zählt es zum Stand der Technik, die Filter in regelmäßigen Abständen abzureinigen. Diverse Verfahren hierzu sind bekannt.

Aus DE 10 2004 013 089 B4 zählt eine Filteranlage zum Stand der Technik, bei welcher zwei Patronenfilter parallel eingesetzt werden, sodass einer dieser Filter während des kontinuierlichen Betriebs abgereinigt werden kann, ohne die Filterfunktion der Anlage zu beeinträchtigen. Zum Abreinigen wird zunächst die Verbindung zur Reingasseite verschlossen und dann der Filter mittels eines Hubzylinders derart bewegt, dass ein zwischen Filterpatrone und Trennwand angeordneter Faltenbalg gefaltet wird, wodurch das eingeschlossene Gasvolumen in Gegenrichtung, d. h. von der Reingasseite zur Rohgasseite, gepresst wird. Durch diese Gegenspülung erfolgt die Abreinigung. Die auf der Rohgasseite des Filters anhaftenden Partikel lösen sich dadurch und fallen herab, sodass der Durchströmungswiderstand des Filters deutlich verringert werden kann und somit der Filter erneut in den Filterprozess eingebunden werden kann. Die Filter werden abwechselnd betrieben und abgereinigt, wodurch ein kontinuierlicher Filter- und Reinigungsbetrieb sichergestellt werden kann.

Die aus DE 10 2004 013 089 B4 bekannte Konstruktion hat sich grundsätzlich bewährt, hat jedoch den Nachteil, dass zum Erzeugen eines entgegengerichteten Gasstroms zur Abreinigung die gesamte Filterpatrone zu bewegen ist, was schon aufgrund der Massenverhältnisse nachteilig ist. Die Faltenbälge, welche eine Filterpatrone gegenüber der Trennwand abdichten, sind verschleißanfällig und müssen nach einer gewissen Betriebsdauer getauscht werden.

Vor diesem Stand der Technik liegt der anmeldungsgemäßen Erfindung die Aufgabe zugrunde, eine gattungsgemäße Filteranlage so auszubilden, dass diese bei vergleichsweise geringem konstruktiven Aufwand eine verbesserte Abreinigung durchführt und die vorgenannten Nachteile vermieden oder zumindest vermindert werden.

Diese Aufgabe wird gemäß der Erfindung durch eine Filteranlage mit den in Anspruch 1 angegebenen Merkmalen gelöst. Vorteilhafte Ausgestaltungen der Erfindung sind in den Unteransprüchen, der nachfolgenden Beschreibung und der Zeichnung angegeben. Darüber hinaus ist gemäß der Erfindung eine Vorrichtung zum Bepudern und/oder Pulverbeschichten mit einer solchen Filteranlage vorgesehen.

Die erfindungsgemäße Filteranlage ist für eine Vorrichtung zum Bepudern, zum Pulverbeschichten oder dergleichen vorgesehen, kann jedoch grundsätzlich auch anderweitig eingesetzt werden. Sie weist mindestens zwei parallel geschaltete Filter auf, deren jeweils eine Seite mit einem Rohgas führenden Raum verbunden ist und deren jeweils andere Seite mit einem Reingas führenden Raum verbindbar ist.

Unter Rohgas im Sinne der Erfindung ist das zu reinigende Gas, also das mit Partikeln angereicherte Gas, typischerweise Luft, zu verstehen, welches zu filtern ist. Unter Reingas im Sinne der Erfindung ist das gefilterte Rohgas zu verstehen, das also den oder die Filter durchsetzt hat und von Partikeln zumindest teilweise befreit ist. Dabei ist unter "Raum" im Sinne der vorliegenden Erfindung nicht notwendigerweise ein abgeschlossenes Volumen zu verstehen, dies kann auch eine Rohgas führende Leitung oder eine Reingas führende Leitung sein.

Bei den eingangs genannten Maschinen ist die Roh- und Reingasseite typischerweise durch eine Trennwand abgetrennt, die durch einen oder mehreren Filter durchsetzt ist. Dabei sind die Filter typischerweise als Filterpatronen ausgebildet, d, h. sie weisen eine im Wesentlichen zylindrische, beispielsweise kreiszylindrische Form auf, mit einem sich quer zur Zylinderachse erstreckenden Boden an einem Ende und einem Befestigungsflansch am anderen Ende. Die Filterfunktion selbst wird durch den rohrförmig zwischen diesen Bauteilen angeordnete Filterkörper gebildet, wie dies auch bei der eingangs beschriebenen Bepuderungsmaschine zum Stand der Technik zählt. Das zu reinigende Rohgas strömt dabei über die Umfangsfläche der Filterpatrone von außen nach innen, um dann durch das im Befestigungsflansch gebildete offene Ende unter Zwischenschaltung eines Absperrventils in den Reingasraum zu gelangen.

Gemäß der Erfindung sind die Filter mit ihren offenen Enden jeweils mit einem Hohlzylinder verbunden, über den sie anlagenseitig festgelegt sind, d. h., in der Filteranlage bzw. der diese Anlage aufweisenden Vorrichtung befestigt sind. In jedem dieser Hohlzylinder ist ein Kolben angeordnet, der innerhalb des Hohlzylinders verfahrbar ist, und zwar derart, dass in einer ersten Stellung des Kolbens das offene Filterende mit dem Reingas führenden Raum verbunden ist, dass in einer zweiten und einer dritten Stellung die Verbindung zum Reingasraum getrennt ist, wobei beim Verfahren des Kolbens von der zweiten zur dritten Stellung ein Gegenstrom zur Abreinigung des Filters erzeugt wird. Der Kolben bildet zugleich auch das Absperrventil.

Grundgedanke der erfindungsgemäßen Lösung ist es, die Filterpatronen fest innerhalb der Anlage bzw. der Vorrichtung oder Maschine anzuordnen und hierfür Hohlzylinder zu verwenden, mit welchen die Filterpatronen z. B. an einer Trennwand oder auch einem Leitungsanschluss einer Reingasleitung festgelegt sind. Zur Erzeugung des Gegenstroms zur Abreinigung des Filters wird nicht der gesamte Filter bewegt, sondern stattdessen gezielt ein hierfür speziell vorgesehener Kolben, welcher innerhalb des Hohlzylinders angeordnet ist und entsprechend ansteuerbar ist. Ein solcher Hohlzylinder mit darin befindlichem Kolben ist konstruktiv wenig aufwendig, mit diesem kann jedoch durch den darin verfahrbar angeordneten Kolben mit geringem konstruktiven und Kraftaufwand eine sehr wirksame Erzeugung eines Gegenstroms erfolgen, um die Filterpatrone abzureinigen. Dabei kann der Hohlzylinder aus Metall oder Kunststoff gebildet sein. Der Kolben sollte aus einem leichten Material, beispielsweise Aluminium oder Kunststoff gebildet sein, sodass nur eine sehr geringe Masse zur Erzeugung eines solchen Gegenstroms zu bewegen ist. Diese im Vergleich zum Stand der Technik geringe Masse kann wesentlich schneller und effizienter bewegt werden, es kann bei Bedarf der Kolben mit vergleichsweise hoher Frequenz hin- und hergefahren werden, um einen guten Abreinigungseffekt zu realisieren. Dabei hat sich in der Praxis gezeigt, dass bei geeigneter Materialpaarung, beispielsweise einer Verwendung eines leichten und aus Kunststoff bestehenden Kolbens in einem metallischen Hohlzylinder, eine zusätzliche Dichtung, beispielsweise in Form eines O-Rings oder eines anders geformten Kolbenrings, entbehrbar sein kann, sodass verschleißanfällige Dichtungen in diesem Bereich entfallen können.

Besonders vorteilhaft ist es, wenn die Hohlzylinder in einer Reingas von Rohgas trennenden Wand angeordnet sind, wie sie z. B. in der eingangs genannten bekannten Bepuderungsmaschine vorhanden ist. Die Hohlzylinder haben dabei mehrere Funktionen. Sie stellen die feste Anbindung der Filterpatronen in der Maschine dar, sie bilden einen Kanal für Reingas und sie sind in Verbindung mit den darin bewegbar geführten Kolben Instrumente zur Gegenstromerzeugung.

Dabei kann ein solcher Zylinder gemäß einer vorteilhaften Weiterbildung der Erfindung zugleich noch eine Schaltfunktion übernehmen, wenn nämlich vorteilhaft mindestens eine Ausnehmung in der Zylinderwand vorgesehen ist, die das Innere des Hohlzylinders mit dem Reingas führenden Raum verbindet. Sobald der Kolben diese Ausnehmung überfahren hat, ist dann nämlich die Verbindung zu dem mit der Ausnehmung in der Zylinderwand verbundenen Raum, also die Leitungsverbindung zum Reingas führenden Raum unterbrochen. Der Reingas führende Raum ist zwar über die Ausnehmung noch mit dem Inneren des Hohlzylinders leitungsverbunden, doch ist das Innere des Hohlzylinders durch den Kolben von dem Inneren der Filterpatrone getrennt und durch den Kolben selbst daran gehindert, zum Filter zurückzuströmen. Die Kolbenzylinderanordnung des Hohlzylinders mit dem darin verfahrbaren Kolben übernimmt somit auch eine Ventilfunktion.

Besonders vorteilhaft ist es, wenn der Hohlzylinder die Trennwand durchsetzt und noch ein Stück in den Reingas führenden Raum hineinragt. Wenn dann in diesem hineinragenden Bereich in dem Hohlzylinder ein oder mehrere Ausnehmungen, vorzugsweise über dem Umfang umlaufend verteilt vorgesehen sind, dann kann beim Verfahren des Kolbens in eine Stellung jenseits der Ausnehmungen ein großer Leitungsquerschnitt zur Durchströmung bereitgestellt werden, in dem das den Filter durchdringende Rohgas zum Reingasraum strömen kann.

Um den Kolben entsprechend anzusteuern, ist vorteilhaft jedem Kolben ein Antrieb zugeordnet, vorzugsweise ein Linearantrieb, der je nach Anforderung beispielsweise elektrisch, hydraulisch oder pneumatisch sein kann.

Insbesondere bei der eingangs beschriebenen Bepuderungsmaschine ist es vorteilhaft, den Kolben mittels eines pneumatisch betätigbaren Hubzylinders anzusteuern. Hierzu ist der Kolben vorteilhaft mit einer Kolbenstange versehen, welche durch eine abschließende Querwand geführt ist, welche den Hohlzylinder an der vom Filter abgewandten Seite abschließt. Es kann dann an der Außenseite dieser Querwand ein Pneumatikzylinder angebracht sein, der mit der Kolbenstange bewegungsverbunden ist. Bei geeigneter Auslegung von Hohlzylinder, Kolben, Ausnehmungen und der Anordnung in einer Trennwand ist der Kolben im normalen Betrieb, d. h. im Filterbetrieb, unbelastet oder mit geringer Kraft beaufschlagt und in Öffnungsstellung angeordnet. Dann genügt ein einfach wirkender Pneumatikzylinder als Antrieb, der nur dann mit Druck beaufschlagt werden muss, wenn die Abreinigung des Filters ansteht, wobei er dann die Kolbenstange mit dem darin befindlichen Kolben zunächst über die Ausnehmungen hinweg in Richtung zur Filterpatrone bewegt, wonach die Leitungsverbindung zur Reingasseite unterbrochen und dann durch Weiterbewegen gezielt ein Gegenstrom zur Abreinigung des Filters erzeugt wird. Die Rückstellung des Kolbens kann durch den Druck des durch den Filter hindurchtretenden Gases selbst oder durch Federkraft erfolgen. Besonders vorteilhaft ist es allerdings, einen doppelt wirkenden Pneumatikzylinder zu verwenden, da dann der Kolben in beiden Richtungen gezielt und schnell bewegbar ist, sodass der Abreinigungsvorgang in ganz kurzen Zeitintervallen wiederholt werden kann, wodurch der Abreinigungseffekt verbessert wird.

Die erfindungsgemäße Filteranlage weist zweckmäßigerweise eine Steuerung auf, welche die Kolbenantriebe so ansteuert, dass abwechselnd stets mindestens ein Filter im Filterbetrieb, d. h. mit den Reingas führenden Raum verbunden ist und ein anderer Filter vom Reingas führenden Raum getrennt ist und dessen Kolben zur Erzeugung eines Gegenstroms zur Abreinigung des Filters bewegungsgesteuert ist. Eine solche Steuerung kann kostengünstig elektronisch, aber auch pneumatisch oder kombiniert bereitgestellt werden.

Grundsätzlich reicht die Anordnung von zwei Filtern aus, die im Wechsel betrieben werden, um eine kontinuierliche Filterung von der Rohgasseite zur Reingasseite zu gewährleisten. Besonders vorteilhaft ist jedoch die Anordnung von drei Filtern, wobei diese so gesteuert sind, dass stets zwei im Filterbetrieb und einer im Abreinigungsbetrieb befindlich ist. Diese Anordnung trägt den Abreinigungsintervallen Rechnung, kann jedoch grundsätzlich auch anders ausgebildet sein.

Um die Filterpatronen einerseits schnell tauschen, andererseits jedoch zuverlässig in die Anlage einbinden zu können, werden vorteilhaft die Filterpatronen, die an ihrem offenen Ende einen Flansch aufweisen, mit diesem Flansch an einem gegenüberliegenden Flansch am filterseitigen Ende des Hohlzylinders lösbar befestigt. Eine solche Flanschverbindung ist konstruktiv einfach und befestigt die Filterpatronen sicher und zuverlässig an der Filteranlage.

Auch wenn die Standzeit der Filterpatronen aufgrund der regelmäßigen Abreinigung vergleichsweise hoch ist, so müssen diese doch in gewissen Zeitintervallen getauscht werden. Hierfür ist es wünschenswert, dass der Tausch möglichst schnell und einfach erfolgt, damit die Unterbrechung des Maschinenbetriebs hierzu nur kurz ist. Gemäß einer Weiterbildung der Erfindung ist hierzu vorgesehen, dass die Befestigung des Filterpatronenflansches am Flansch des Hohlzylinders mittels eines Bajonettrings erfolgt, welcher den Filterpatronenflansch übergreift und dessen Gegenformschlusselemente am Flansch des Hohlzylinders vorgesehen sind. Bei einer solchen Verbindung kann nach Öffnen der Maschine auf der Rohgasseite die Bajonettverbindung von Hand gelöst und die Filterpatrone getauscht werden. Dies kann bei geeigneter Ausgestaltung sogar ohne die Verwendung eines besonderen Werkzeuges erfolgen.

Eine solche Bajonettverbindung kann in einfacher Weise dadurch gebildet sein, dass in einem Bajonettring, welcher den Filterflansch radial und axial übergreift, Langlöcher ausgebildet sind, welche in Einbaulage der Filterpatrone von Bolzen durchsetzt sind, die am Flansch des Hohlzylinders angeordnet sind und deren zur Filterpatrone gerichtete Enden mit Formschlusskörpern versehen sind, welche die Langlöcher seitlich übergreifen. Dabei sind die Langlöcher so ausgestaltet, dass sie in einer ersten Drehstellung des Rings aufgeweitet ausgebildet sind, um die Formschlusskörper durch diesen Teil der Langlöcher hindurch führen zu können, um dann den Bajonettring um einen bestimmten Winkelbereich um seine Achse zu drehen, sodass die Formschlusselemente in den Bereich der Langlöcher gelangen, in denen sie seitlich diese übergreifen und somit unter Einschluss des Filterpatronenflansches die Filterpatrone am Flansch des Hohlzylinders festlegen.

Die Erfindung ist nachfolgend anhand eines in der Zeichnung dargestellten Ausführungsbeispiels näher erläutert. Es zeigen:
- Fig. 1: in stark vereinfachter schematischer Ansicht eine Bepuderungsmaschine,
- Fig. 2: einen Schnitt durch die Bepuderungsmaschine der Fig. 1 längs der Schnittlinie AA,
- Fig. 3: in stark vergrößerter perspektivischer Darstellung die Anordnung von drei Filtern innerhalb der Maschine gemäß Fig. 1,
- Fig. 4: in stark vergrößerter schematischer perspektivischer Darstellung die Ansicht auf eine an einem Hohlzylinder befestigte Filterpatrone,
- Fig. 5: die Anordnung einer Filterpatrone in Seitenansicht,
- Fig. 6: einen Längsschnitt durch die Anordnung gemäß Fig. 5 längs der Schnittlinie A-A in Fig. 5,
- Fig. 7: einen um 90° versetzten Schnitt der Anordnung gemäß Fig. 5 in einer zweiten Kolbenstellung und
- Fig. 8: eine Schnittdarstellung entsprechend Fig. 7 in einer dritten Kolbenstellung.

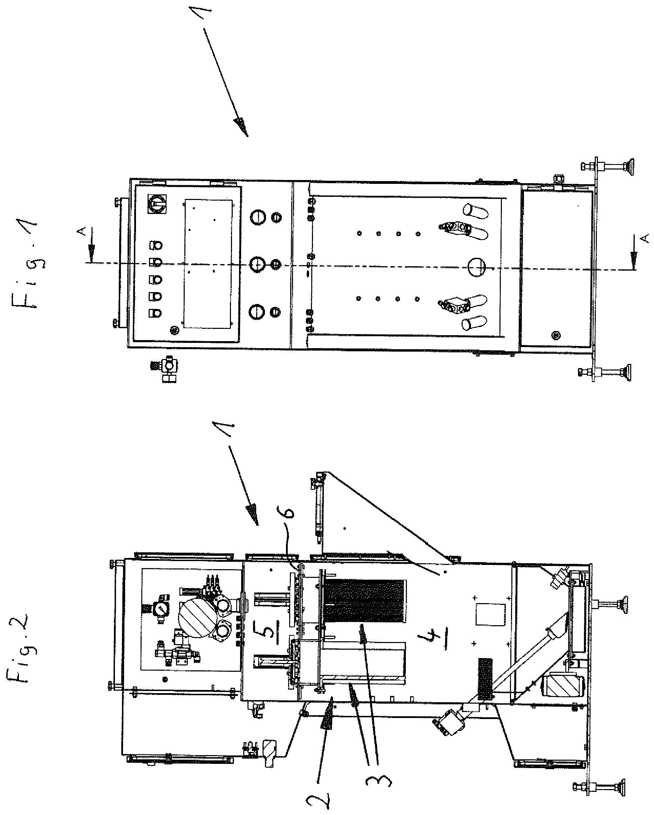

Bei der in den Fig. 1 und 2 dargestellten Maschine handelt es sich um eine Bepuderungsmaschine 1, deren zentrale Komponente eine Filteranlage 2 ist, die aus drei Filtern 3 aufgebaut ist, mit deren Hilfe das in einem unteren Raum 4 der Maschine befindliche Rohgas, bei dem es sich um mit Partikeln angereicherte Luft handelt, gefiltert und in einen darüber befindlichen Raum 5 als Reingas, also gefiltertes Rohgas, gelangt. Die Räume 4 und 5 sind durch eine horizontale Trennwand 6 getrennt, zwischen dem Rohgasraum 4 und dem Reingasraum 5 besteht während des Betriebs der Maschine ein Druckgefälle, um eine Filterdurchströmung in dieser Richtung zu erzeugen.

Eine solche Maschine zählt zum Stand der Technik, ist eingangs spezifiziert (RS-POWDERTECH) und wird daher nicht im Einzelnen beschrieben.

Jeder Filter 3 weist eine Filterpatrone 7 auf, die eine im Wesentlichen zylindrische Form hat, an ihrem freien Ende einen kreisrunden Boden 8 und an ihrem zur Befestigung vorgesehenen Ende einen Flansch 9. Zwischen dem Boden 8 und dem Flansch 9 ist rohrförmig flächiges Filtermaterial 10 angeordnet, welches im Querschnitt zickzackförmig und gefaltet zu einem zylindrischen Hohlkörper geformt ist.

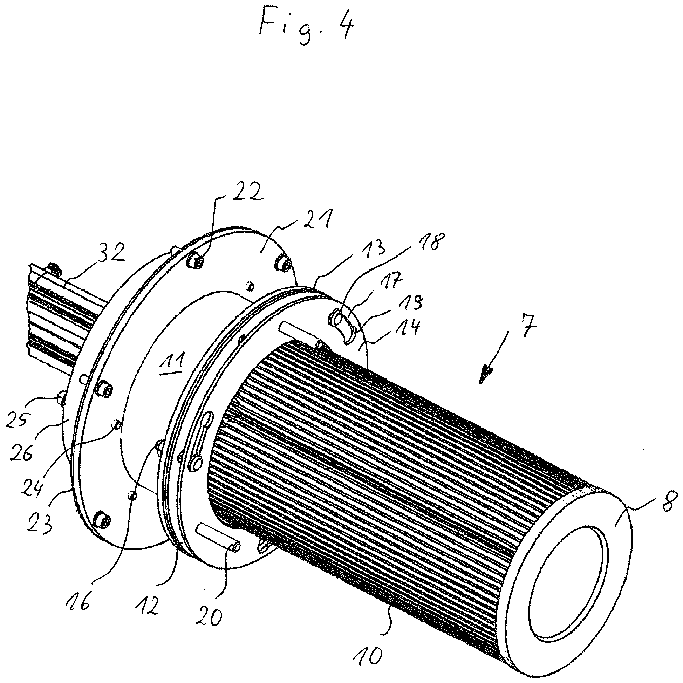

Fluchtend zu dem zylindrischen Hohlkörper der Filterpatrone 7 schließt sich ein hohlzylindrischer Körper 11 an, der in der vorliegenden Ausführung aus Metall gebildet ist, alternativ jedoch auch aus Kunststoff oder einem anderen geeigneten Werkstoff bestehen kann. Der Hohlzylinder 11 ist an seinem zur Filterpatrone gerichteten Ende mit einem Flansch 12 versehen, der zum Anschluss des Flansches 9 der Filterpatrone vorgesehen ist und Teil einer Bajonettverbindung bildet. Dieser Flansch 12 ist unter Eingliederung einer Dichtung 13 mit dem Flansch 9 der Filterpatrone 7 zur Anlage gebracht und mittels eines den Flansch der Filterpatrone übergreifenden Bajonettrings 14 formschlüssig und dicht mit dem Flansch 12 verbunden. Hierzu sind im Flansch 12 Bohrungen 15 vorgesehen, in denen Bolzen 16 festgelegt sind, welche sich senkrecht von der zur Filterpatrone 7 gerichteten Fläche des Flansches 12 erstrecken, seitlich an dem Flansch 9 vorbei geführt sind und durch Langlöcher 17 im Bajonettring 14 geführt sind. Diese Bolzen 16 weisen an ihren freien Enden Formschlusselemente in Form von Köpfen 18 auf, welche den Schaft des Bolzens 16 radial überragen und durch Aufweitungen 19 in den Langlöchern 17 des Bajonettrings 14 geführt werden, wonach der Bajonettring 14 in Fig. 4 im Uhrzeigersinn gedreht wird, sodass die Schäfte der Bolzen 16 innerhalb der Langlöcher 17 außerhalb des Bereichs der Aufweitungen 19 gelangen und somit die Köpfe 18 den Bajonettring 14 unter Eingliederung des Flansches 9 in axialer sowie in weiteren Richtungen formschlüssig und im Übrigen kraftschlüssig festlegen. Um den Bajonettring 14 ohne Zuhilfenahme eines Werkzeugs drehen zu können, sind an diesem Zapfen 20 angebracht, welche sich parallel zur Filterpatrone 7 erstrecken und mit der Hand greifbar sind, um zum Austausch der Filterpatrone 7 den Bajonettring 14 zunächst drehen und dann in axialer Richtung entfernen zu können sowie in umgekehrter Richtung nach Austausch der Filterpatrone wieder festlegen zu können.

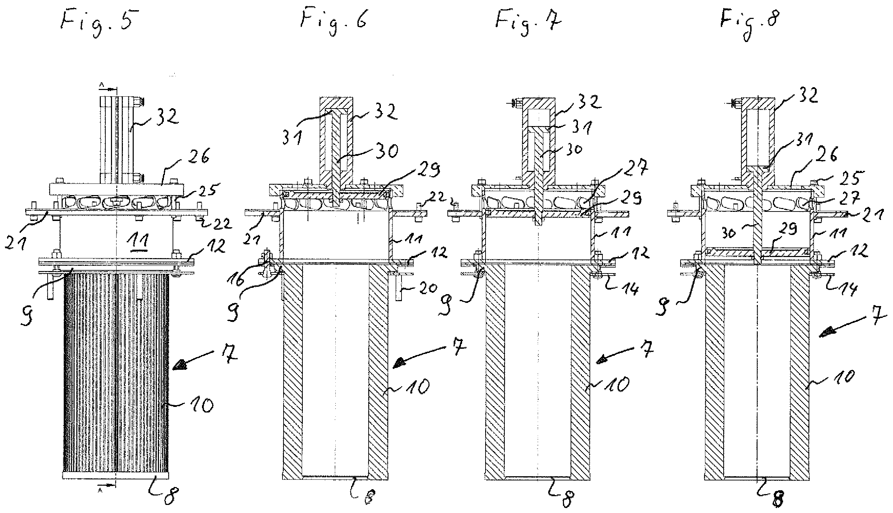

Mit deutlichem Abstand zum Flansch 12, ist mit geringerem Abstand zum filterpatronenabgewandten Ende an der Außenseite des Hohlzylinders 11 ein Befestigungsflansch 21 angebracht, der zur Befestigung des Filters 3 innerhalb der Trennwand 6 der Maschine 1 vorgesehen ist. Dieser Befestigungsflansch 21 ist mit Bohrungen versehen, die zur Aufnahme von Befestigungsschrauben 22 vorgesehen sind, mit denen jeder Flansch 21 in einer entsprechend dafür vorgesehenen Ausnehmung der Trennwand 6 unter Eingliederung einer Dichtung 23 befestigt ist. Weiterhin weist der Befestigungsflansch 21 weiter innen liegende Gewindebohrungen 24 auf, die zur Aufnahme von Schrauben 25 vorgesehen sind, mit denen ein Deckel 26 befestigt ist, der den Hohlzylinder 11 an seinem von der Filterpatrone 7 abgewandten Ende abschließt. Dieser Deckel 26 übergreift den Hohlzylinder 11 und ist in dem übergreifenden Bereich von den Schrauben 25 durchsetzt, deren Enden in den Gewindebohrungen 24 befestigt sind, wie dies in Fig. 5 dargestellt ist.

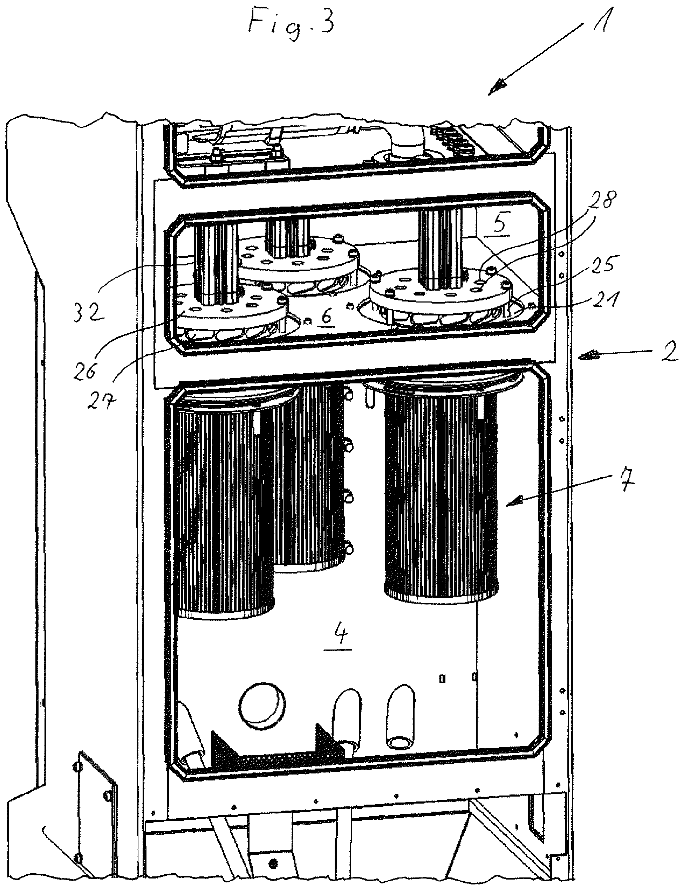

In dem Bereich zwischen dem Befestigungsflansch 21 und dem Deckel 26 sind über den Umfang des Hohlzylinders 11 verteilt eine Vielzahl von Ausnehmungen 27 vorgesehen, welche in Einbaulage oberhalb der Trennwand 6 (in Darstellung gemäß Fig. 3) liegen und somit den Innenraum des Hohlzylinders 11 mit dem Raum 5, also dem Reingas führenden Raum 5, verbinden. Weiterhin sind im Deckel 26 Bohrungen 28 vorgesehen, über welche der Innenraum des Hohlzylinders 11 ebenfalls mit dem Reingasraum 5 verbunden ist. Somit ergibt sich ein Strömungsweg vom Raum 4 durch das Filtermaterial 10 der Filterpatrone 7 in den Hohlzylinder 11 und von dort durch die Ausnehmungen 27 und die Bohrungen 28 in den Reingasraum 5.

Innerhalb jedes Hohlzylinders 11 ist ein scheibenförmiger Kolben 29 axial bewegbar angeordnet. Der Kolben 29 liegt mit seinem Außenumfang dicht am Innenumfang des Hohlzylinders 11 an und ist in axialer Richtung bewegbar, wie die Figuren 6 bis 8 zeigen, in denen der Kolben 29 in drei unterschiedlichen Positionen dargestellt ist. Der Kolben ist über eine zentrale Kolbenstange 30, welche durch eine zentrale Ausnehmung im Deckel 26 geführt ist, mit einem Kolben 31 eines Pneumatikzylinders 32 bewegungsgekoppelt, der auf der in Einbaulage Oberseite des Deckels 26, also der vom Hohlzylinder 11 abgewandten Seite des Deckels 26 fest montiert ist. Der Pneumatikzylinder 32 ist in der dargestellten Ausführungsform doppelt wirkend, d. h., der Kolben 31 kann, je nach Druckbeaufschlagung, in die eine oder die andere Richtung bewegt werden. Grundsätzlich kann dieser Pneumatikzylinder 32 durch einen einfach wirkenden Zylinder ersetzt werden, wobei die Rückstellkraft des Kolbens entweder durch Federkraft oder durch Druckkraft über den Kolben 29 erfolgt.

In Fig. 6 ist eine erste Position des Kolbens 29 dargestellt, die den normalen Filterbetrieb repräsentiert. In dieser Stellung sind lediglich die Bohrungen 28, die dazu dienen, dass der Kolben 29 bis an den Deckel 26 fahren kann, abgedeckt. Die Ausnehmungen 27 sind mit dem Inneren des Hohlzylinders 11 und dieser wiederum mit dem Inneren der Filterpatrone 7 verbunden, sodass der normale Strömungsweg vom Rohgasraum 4 durch den Filter zum Reingasraum 5 freigegeben ist.

Die Fig. 7 und 8 zeigen eine zweite und eine dritte Position des Kolbens 29, in welchen dieser Strömungsweg durch den Kolben 29 gesperrt ist und die zum Abreinigen des Filters dienen. In der in Fig. 7 dargestellten zweiten Position hat der Kolben 29 ausgehend von der normalen Filterposition gemäß Fig. 6 die Ausnehmungen 27 überfahren, sodass der Kolben 29 den Leitungsweg vom Filter 3 zum Reingasraum 5 absperrt.

Wird nun der Kolben 29 aus der in Fig. 7 dargestellten zweiten Position in die in Fig. 8 dargestellte dritte Position verfahren, in welcher der Kolben das filterpatronenseitige Ende des Hohlzylinders 11 erreicht, dann wirkt der Kolben nach Art einer Kolbenpumpe und erzeugt einen Gegenluftstrom, in dem das vom Kolben aus dem Hohlzylinder gestoßene Gasvolumen die Filterpatrone 7 im Gegenstrom, also von innen nach außen durchströmt. Dadurch wird eine Abreinigung erzeugt, indem die sich dort an der Außenseite des Filtermaterials 10 festgesetzten Partikel durch den Luftstrom gelöst und schwerkraftbedingt herunterfallen. Diese Abreinigung kann durch gezielte Hin- und Herbewegung des Kolbens 29 durch entsprechende Ansteuerung des Pneumatikzylinders 32 ganz erheblich gesteigert werden. Durch eine schnelle Hin- und Herbewegung des Kolbens 29 werden wiederholt kurzzeitig Gegenluftströme erzeugt, welche den Abreinigungsprozess verbessern. Hierzu ist eine entsprechende Steuerung vorgesehen, die im oberen Teil der Maschine 1 angeordnet ist und elektropneumatisch arbeitet.

Da der Kolben 29 vor Beginn der Erzeugung des Gegenstroms die Ausnehmungen 27 überfährt und somit den Weg zum Reingasraum 5 absperrt, kann die Abreinigung während des normalen Filterbetriebs erfolgen, Voraussetzung ist lediglich, dass mindestens ein weiterer Filter 3 im Filterbetrieb (Position gemäß Fig. 6) verbleibt. Es ist also kein weiterer maschinenseitiger Eingriff erforderlich, was von Vorteil ist.

Die dargestellte Bepuderungsmaschine 1 weist drei Filter 3 auf, die identisch aufgebaut sind. Die Ansteuerung der Pneumatikzylinder 32 erfolgt so, dass stets zwei dieser Filter 3 im normalen Filterbetrieb befindlich und ein dritter im Abreinigungsbetrieb. Auf diese Weise kann einerseits eine hocheffiziente Reinigung der Filter im laufenden Betrieb gewährleistet werden und andererseits eine hocheffiziente Filterung bei hohen Volumenströmen.

Zum Auswechseln der Filterpatronen 7 ist lediglich die in Fig. 3 bereits entfernte Frontklappe vom unteren Teil der Maschine 1 zu entfernen, wonach der Rohgasraum 4 und damit auch die Filterpatronen 7 und die Bajonettringe 14 zugänglich sind. Um eine Verbindung zwischen Reingasraum 5 und Rohgasraum 4 sicher auszuschließen, ist es zweckmäßig, zum Filterwechsel die Pneumatikzylinder 32 so anzusteuern, dass die Kolben 29 die in Fig. 8 dargestellte dritte Position einnehmen oder eine zwischen der zweiten und dritten Position, in jedem Fall eine solche Position, in welcher die Leitungsverbindung zum Reingasraum 5 unterbrochen ist.

### Bezugszeichen

- 1: Bepuderungsmaschine
- 2: Filteranlage
- 3: Filter
- 4: Raum für Rohgas
- 5: Raum für Reingas
- 6: Trennwand
- 7: Filterpatronen
- 8: Boden der Filterpatrone
- 9: Flansch der Filterpatrone
- 10: Filtermaterial
- 11: hohlzylindrischer Körper, Hohlzylinder
- 12: Flansch von 11
- 13: Dichtung
- 14: Bajonettring
- 15: Bohrungen
- 16: Bolzen
- 17: Langlöcher in 14
- 18: Köpfe von 16
- 19: Aufweitungen von 17
- 20: Zapfen
- 21: Befestigungsflansch
- 22: Befestigungsschrauben
- 23: Dichtung
- 24: Gewindebohrungen
- 25: Schrauben
- 26: Deckel
- 27: Ausnehmungen in 11
- 28: Bohrungen in 26
- 29: Kolben
- 30: Kolbenstange
- 31: Kolben des Pneumatikzylinders
- 32: Pneumatikzylinder

## Patentansprüche

1. Filteranlage (2) für eine Vorrichtung zum Bepudern (1), Pulverbeschichten oder dgl., mit mindestens zwei parallel geschalteten Filtern (3), deren jeweils eine Seite mit einem Rohgas führenden Raum (4) verbunden ist und deren jeweils andere Seite mit einem Reingas führenden Raum (5) verbindbar ist, wobei die Filter (3) als Filterpatronen (7) ausgebildet sind und jeweils ein zur Reingasseite hin offenes Ende aufweisen, **dadurch gekennzeichnet, dass** die Filterpatronen (7) mit ihren offenen Enden jeweils mit einem Hohlzylinder (11) verbunden sind, über den sie anlagenseitig festgelegt sind und dass in jedem Hohlzylinder (11) ein Kolben (29) angeordnet ist, derart, dass in einer ersten Stellung (Fig. 6) des Kolbens (29) das offene Filterende mit dem Reingas führenden Raum (5) verbunden ist, dass in einer zweiten (Fig. 7) und einer dritten Stellung (Fig. 8) die Verbindung zum Reingasraum (5) getrennt ist, wobei beim Verfahren des Kolbens (29) von der zweiten zur dritten Stellung ein Gegenstrom zur Abreinigung des Filters (3) erzeugbar ist.

2. Filteranlage nach Anspruch 1, **dadurch gekennzeichnet, dass** die Hohlzylinder (11) in einer Reingas von Rohgas trennenden Wand (6) angeordnet sind.

3. Filteranlage nach Anspruch 1 oder 2, **dadurch gekennzeichnet, dass** jeder Hohlzylinder (11) mindestens eine Ausnehmung (27) in der Zylinderwand aufweist, die das Innere des Hohlzylinders (11) mit dem Reingas führenden Raum (5) verbindet.

4. Filteranlage nach einem der vorhergehenden Ansprüche, **dadurch gekennzeichnet, dass** die Hohlzylinder (11) jeweils nahe ihren vom Filter (3) abgewandten Enden vorzugsweise über dem Umfang verteilt angeordnete Ausnehmungen (27) aufweisen.

5. Filteranlage nach einem der vorhergehenden Ansprüche, **dadurch gekennzeichnet, dass** die Hohlzylinder (11) an ihren vom Filter (3) abgewandten Enden eine den Hohlzylinder (11) abschließende Querwand (26) aufweisen.

6. Filteranlage nach einem der vorhergehenden Ansprüche, **dadurch gekennzeichnet, dass** jeder Kolben (29) einen Antrieb, vorzugsweise einen Linearantrieb (32), aufweist.

7. Filteranlage nach einem der vorhergehenden Ansprüche, **dadurch gekennzeichnet, dass** jeder Kolben (29) eine Kolbenstange (30) aufweist, welche durch die abschließende Querwand (26) geführt ist.

8. Filteranlage nach einem der vorhergehenden Ansprüche, **dadurch gekennzeichnet, dass** jede Kolbenstange (30) mit einem vorzugsweise pneumatisch betätigbaren Hubzylinder (32) verbunden ist.

9. Filteranlage nach einem der vorhergehenden Ansprüche, **dadurch gekennzeichnet, dass** eine Steuerung vorgesehen ist, welche die Kolbenantriebe (32) so ansteuert, dass abwechselnd stets mindestens ein Filter (3) im Filterbetrieb und mit dem Reingas führenden Raum (5) verbunden ist und ein anderer Filter (3) vom Reingas führenden Raum (5) getrennt ist und dessen Kolben (29) zum Erzeugen eines Gegenstroms zur Abreinigung des Filters (3) bewegungsgesteuert ist.

10. Filteranlage nach einem der vorhergehenden Ansprüche, **dadurch gekennzeichnet, dass** drei Filter (3) vorgesehen sind, von denen abwechselnd zwei im Filterbetrieb und einer im Abreinigungsbetrieb ist.

11. Filteranlage nach einem der vorhergehenden Ansprüche, **dadurch gekennzeichnet, dass** die Filterpatronen (7) an ihrem offenen Ende einen Flansch (9) aufweisen, mit dem sie an einem gegenüberliegenden Flansch (12) am filterseitigen Ende des Hohlzylinders (11) lösbar befestigt sind.

12. Filteranlage nach einem der vorhergehenden Ansprüche, **dadurch gekennzeichnet, dass** die Befestigung des Filterpatronenflansches (9) am Flansch (12) des Hohlzylinders (11) mittels eines den Filterpatronenflansch (9) übergreifenden Bajonettrings (14) erfolgt, dessen Gegenformschlusselemente (16, 18) am Flansch (12) des Hohlzylinders (11) vorgesehen sind.

13. Filteranlage nach einem der vorhergehenden Ansprüche, **dadurch gekennzeichnet, dass** im Bajonettring (14) Langlöcher (17) ausgebildet sind, welche in Einbaulage der Filterpatrone (7) von Bolzen (16) durchsetzt sind, die am Flansch (12) des Hohlzylinders (11) angeordnet sind und die an ihren freien Enden mit Formschlusskörpern (18) versehen sind, welche die Langlöcher (17) seitlich übergreifen.

14. Vorrichtung zum Bepudern (1) und/oder Pulverbeschichten mit einer Filteranlage (3) nach einem der vorhergehenden Ansprüche.
